# EUROPEAN PATENT SPECIFICATION

(11) **EP 4 525 164 B1**
(45) Date of publication and mention of the grant of the patent: **04.11.2026**
(21) Application number: 23840035.2
(22) Date of filing: 13.07.2023
(51) Int. Cl.: H01M 50/30, H01M 50/367, H01M 50/204, H01M 50/249, H01M 10/6563, H01M 10/6568

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 14.07.2022 KR 20220087178
(43) Date of publication of application: 19.03.2025
(73) Proprietor: LG Energy Solution, Ltd., Seoul 07335 (KR)
(72) Inventor: PARK, Jong Bum, Daejeon 34122 (KR)
(74) Representative: Plasseraud IP
(86) International application number: PCT/KR2023/095029
(87) International publication number: WO 2024/014944

(56) References cited:
- CN-A- 110 100 325
- CN-A- 112 018 299
- DE-A1- 102014 017 868
- DE-A1- 102014 213 920
- JP-A- 2015 049 999
- JP-A- H03 167 033
- KR-A- 20130 051 102
- KR-A- 20200 124 031
- KR-B1- 102 385 145
- US-A1- 2012 070 703

## Description

### TECHNICAL FIELD

The present application claims the benefit of the priority of Korean Patent Application No. 10-2022-0087178, filed on July 14, 2022.

The present invention relates to a battery pack and a device including the same, and more particularly, to a battery pack capable of smoothly discharging a high-temperature gas and a device including the same.

### BACKGROUND ART

Recently, as demands for portable electronic products such as laptops, video cameras, and mobile phones have rapidly increased, and development of electric vehicles, energy storage batteries, robots, satellites, etc. is regularized, a lot of researches have been conducted on a secondary battery used as a driving power source.

As needs for structures of large-capacity secondary batteries, demands for battery packs having a multi-module structure in which battery modules, in which a plurality of secondary batteries are connected to each other, are assembled are increasing.

When a battery cell provided in the battery pack is ignited, a high-temperature gas and flame may be generated. If the high-temperature gas and flame are not discharged smoothly, a pressure inside the battery pack may increase, and thus, the pack structure may collapse. Moreover, JP H03 167033 discloses a method for exhausting gas generated by a battery of a vehicle.

### DISCLOSURE OF THE INVENTION

### TECHNICAL PROBLEM

An embodiment of the present invention is to provide a battery pack capable of smoothly discharging a gas generated therein and a device including the same.

The object of the present invention is not limited to the aforesaid, but other objects not described herein will be clearly understood by those skilled in the art from descriptions below.

### TECHNICAL SOLUTION

The present invention provides a battery pack defined in claim 1. Preferred embodiments are defined in the appended dependent claims. A battery pack according to an embodiment of the present invention includes: a plurality of battery modules; a passage frame disposed along an edge of at least a portion of the plurality of battery modules to define an inner passage; and a blowing member communicating with one end of the inner passage of the passage frame to control a gas discharge rate within the inner passage.

According to the invention, the battery pack further includes an outlet communicating with the other end of the inner passage of the passage frame.

According to the invention, the battery pack further includes: a pack housing configured to accommodate the battery modules and the passage frame; a storage tank disposed at at least one of the inside or the outside of the pack housing; and a fluid supply tube disposed between the storage tank and the passage frame, wherein a fluid stored in the storage tank may be supplied into the inner passage of the passage frame through the fluid supply tube.

According to an embodiment, the fluid may be at least one of a liquid comprising water or a gas comprising nitrogen.

According to an embodiment, the blowing member may operate when a pressure of the inner passage is a first pressure, and the storage tank may operate when the pressure of the inner passage is the first pressure or a second pressure higher than the first pressure after the blowing member operates.

According to an embodiment, the storage tank may be configured to discharge the fluid at a third pressure higher than the second pressure.

According to the invention, the fluid supply tube is branched from the passage frame.

According to an embodiment, the storage tank may be provided in plurality, one of the plurality of storage tanks may be configured to store a gas for discharging foreign substances, which is injected into the inner passage, and the other of the plurality of storage tanks may be configured to store a liquid for discharging foreign substances, which is injected into the inner passage.

According to an embodiment, the passage frame may include: a first passage frame disposed along an edge of one side of the plurality of battery modules; and a second passage frame disposed along an edge of the other side of the plurality of battery modules.

According to an embodiment, the blowing member may include a rotating fan.

A device according to an embodiment of the present invention may include the above-described battery pack.

### ADVANTAGEOUS EFFECTS

According to the embodiment of the present invention, the gas generated in the battery pack may be smoothly discharged through the blowing member disposed inside the battery pack to suppress the generation of the flame and the increase in pressure inside the battery pack.

According to the embodiment of the present invention, the foreign substances accumulated inside the battery pack may be discharged to the outside through the fluid injected into the battery pack to manage the pressure inside the battery pack to the certain level.

According to the embodiment of the present invention, when the abnormality of the battery cell occurs, the stability of the battery pack may be improved through at least one of the blowing member disposed inside the battery pack or the fluid injected into the battery pack.

In addition, the various effects that are directly or indirectly identified through the present disclosure may be provided.

### BRIEF DESCRIPTION OF THE DRAWINGS

FIG. 1 is a perspective view of a battery pack according to a first embodiment out of the scope of the present invention.
FIG. 2 is an exploded perspective view of a battery module illustrated in FIG. 1.
FIG. 3 is a cross-sectional view for specifically explaining a passage frame illustrated in FIG. 1.
FIGS. 4a and 4b are views for explaining a method for discharging a gas within a battery pack according to an embodiment out of the scope of the present invention, which uses the passage frame illustrated in FIG. 3.
FIG. 5 is a cross-sectional view illustrating a portion of a battery pack according to an embodiment of the present invention.
FIGS. 6a and 6b are views for explaining a method for discharging a gas within a battery pack according to another embodiment of the present invention, which uses the passage frame illustrated in FIG. 5.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention is defined by the claims and may be implemented in several different forms and is not limited or restricted by the following embodiments.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### First embodiment

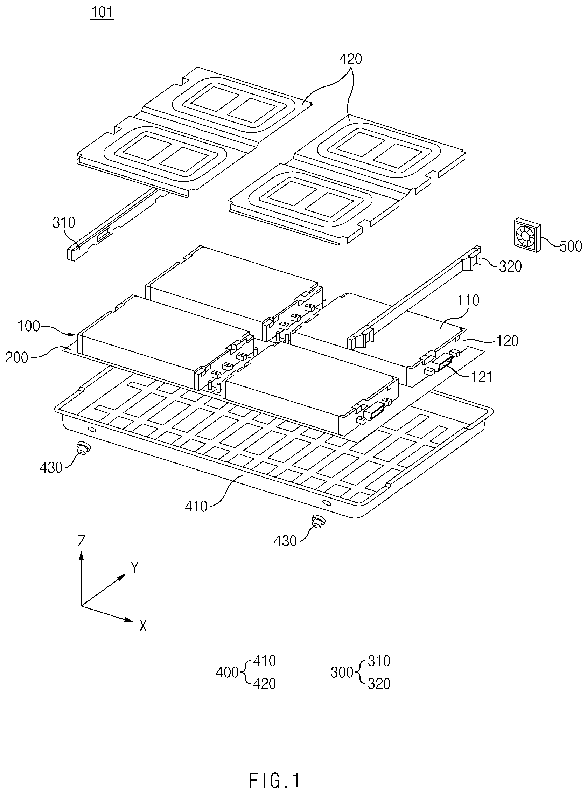

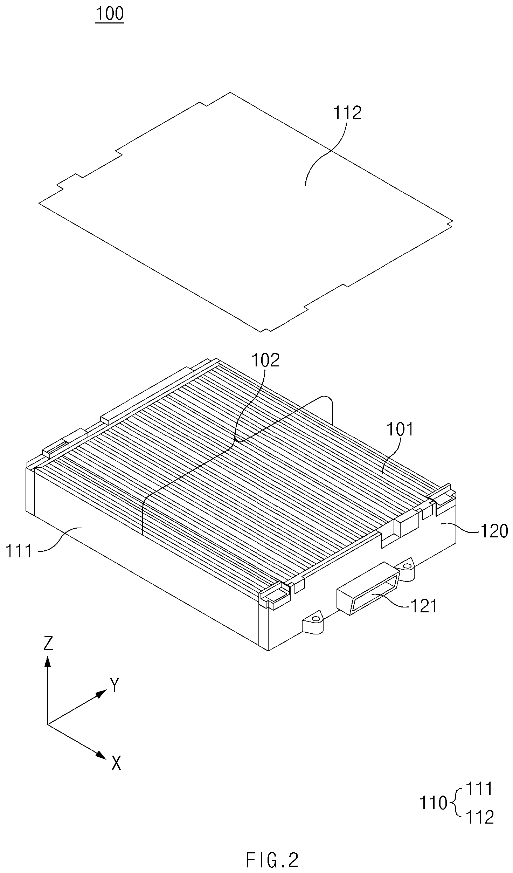

FIG. 1 is a perspective view of a battery pack according to a first embodiment out of the scope of the present invention, and FIG. 2 is an exploded perspective view of a battery module illustrated in FIG. 1.

Referring to FIG. 1, a battery pack 101 according to the first embodiment out of the scope of the present invention may include a pack housing 400, a plurality of battery modules 100 accommodated in the pack housing 400, and a passage frame 300.

As illustrated in FIG. 2, each of the plurality of battery modules 100 may include a battery cell stack 102 in which a plurality of battery cells 103 are stacked, a module frame 110 accommodating the battery cell stack 102, and an endplate 120.

The plurality of battery cells 103 may be stacked to be electrically connected to each other, thereby providing the battery cell stack 102. For example, the plurality of battery cells 103 may be stacked in a direction parallel to a y-axis as illustrated in FIG. 2.

The module frame 110 that accommodates the battery cell stack 102 may include an upper plate 112 and a lower frame 111. The lower frame 111 may be a U-shaped frame. The U-shaped lower frame 111 may include a bottom part and two side parts respectively extending from both ends of the bottom part in a z-axis direction. The bottom part may cover a bottom surface of the battery cell stack 102 (in a direction opposite to the z-axis), and the side parts may cover both side surfaces of the battery cell stack 102 (in the y-axis direction and a direction opposite to the y-axis direction).

The upper plate 112 may be provided as a single plate-shaped structure that surrounds a top surface (z-axis direction) except for the bottom surface, which is surrounded by the lower frame 111, and both the side surfaces. The upper cover 112 and the lower frame 111 may provide a structure that is coupled by welding to cover the battery cell stack 102 in a vertical direction and in a left and right direction in a state of being in contact with edge portions corresponding to each other. The battery cell stack 102 may be physically protected through the upper plate 112 and lower frame 111. Each of the upper plate 112 and the lower frame 111 may include a metal material with predetermined strength.

The endplate 120 may cover the battery cell stack 102 exposed to both ends of the module frame 110. A venting gate 121 may be provided in at least one of the two endplates 120. The venting gate 121 may communicate with the inside of the battery module 100 to release flame or heat generated inside the battery module 100. The venting gate 121 may be connected to an opening (not shown) defined in a portion of the endplate 120 to communicate with the inside of the battery module 100. The venting gate 121 may be disposed to face the outside of the battery pack 101.

The plurality of battery modules 100 may be arranged in a row or in a matrix form. For example, some of the plurality of battery modules 100 arranged in the matrix form may be arranged in a first row parallel to the y-axis direction, and some of the remaining battery modules 100 may be arranged in a second row parallel to the first row. The plurality of battery modules 100 arranged in the first row and the plurality of battery modules 100 arranged in the second row may be arranged symmetrically with respect to the y-axis direction. The venting gate 121 of each of the plurality of battery modules 100 arranged in the first row may be disposed in a direction opposite to the x-axis direction. The venting gate 121 of each of the plurality of battery modules 100 arranged in the second row may be disposed in the x-axis direction.

The passage frame 300 may be provided along an edge of at least a portion of the plurality of battery modules 100. The passage frame 300 may be provided along at least one side of a plurality of sides of the lower housing 410. The passage frame 300 may be provided in a tubular shape between the lower housing 410 and the battery module 100. At least one passage frame 300 may be provided between the lower housing 410 and the battery module 100. For example, when the plurality of battery modules 100 arranged in the matrix form are disposed in two rows, the passage frame 300 may include a first passage frame 310 and a second passage frame 320, which are disposed side by side. The first passage frame 310 may be provided to extend along the endplates 120 of the plurality of battery modules 100 arranged in the first row. The second passage frame 320 may be provided to extend along the endplates 120 of the plurality of battery modules 100 arranged in the second row. An inner passage of the first passage frame 310 and an inner passage of the second passage frame 320 may be provided to communicate with each other or may be provided to be spaced apart from each other.

The pack housing 400 may include a lower housing 410 and an upper cover 420.

The upper cover 420 may be coupled to the lower housing 410 to cover an upper portion of the battery module 100, thereby protecting an overall length inside the pack housing 400.

The lower housing 410 may include a bottom surface and a side wall extending in the z-axis direction from the edge of the bottom surface. A pack tray 200 may be seated on the bottom surface. The battery module 100, the passage frame 300, the blowing member 500, and the pack tray 200 may be accommodated in the lower housing 410. The plurality of battery modules 100, the passage frame 300, and the blowing member 500 may be disposed on the pack tray 200. The plurality of battery modules 100 and the passage frame 300 may be fixed to the pack tray 200 as necessary.

The blowing member 500 may discharge air into the inner passage of the passage frame 300 through an outlet. The blowing member 500 may be a blowing fan (or rotating fan) having a plurality of blades installed to rotate about an axis or may be a blowing member without blades.

The blowing member 500 may operate when at least one of a gas flow rate, a gas amount, and a pressure inside the passage frame 300 reaches a certain level (reference value). Due to the operation (or rotation) of the blowing member 500, the gas in the passage frame 300 may be discharged to the outside at a rate exceeding performance of the venting member to suppress an increase in temperature and pressure inside the battery pack 101. The venting member may include at least one of a venting gate 121, an outlet 430, a venting valve, or a rupture disc.

The outlet 430 may be disposed at one side wall of the lower housing 410 to discharge heat or flame generated inside to the outside. At least one of the venting valve or the rupture disc, which are provided in the venting member, may be disposed around the outlet 430. The rupture disc may be connected to the passage frame 300. The rupture disc may be provided to be ruptured when the pressure of the gas flowing into the inner passage of the passage frame 300 exceeds a certain pressure.

Various control and protection systems, such as a battery management system (BMS) and a cooling system, together with the battery module 100 may be installed inside the pack housing 400 including the lower housing 410 and the upper cover 420. The battery management system may monitor at least one of a pressure, a temperature, or a gas of at least one of the battery module 100 or the passage frame 300. The battery management system may control whether the blowing member 500 operates by comparing a monitored measurement value to a preset reference value. The battery management system may control the blowing member 500 to operate when the monitored measurement value reaches the preset reference value. The battery management system may control the blowing member 500 so as not to operate when the monitored measurement value is less than the preset reference value.

As an example, the battery management system may compare the measured pressure to a preset reference pressure and may control the blowing member 500 to operate when the measured pressure reaches the reference pressure. As another example, the battery management system may compare the measured gas amount to a preset reference gas amount and may control the blowing member 500 to operate when the measured gas amount reaches the reference gas amount. As another example, the battery management system may control the blowing member 500 to operate when at least two of the measured values of the pressure, the temperature, and the gas reach preset reference values.

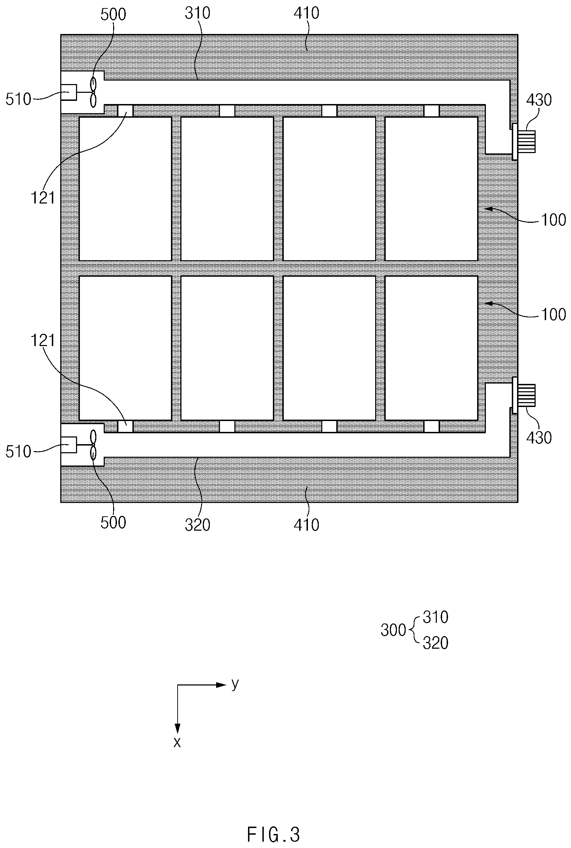

FIG. 3 is a cross-sectional view for specifically explaining the passage frame illustrated in FIG. 1. There are two passage frames illustrated in FIG. 3, but are not limited thereto, and their positions and number may be appropriately selected as necessary.

Referring to FIG. 3, the passage frame 300 according to the first embodiment out of the scope of the present invention may communicate with the venting gate 121 and the outlet 430 of the battery module 100. When thermal runaway occurs from the battery module 100, the passage frame 300 may minimize an impact on the surrounding battery modules by inducing the heat and flames to the outside. Here, the flame contained in the generated high-pressure venting gas may be burned while passing through the inner passage of the passage frame 300 and then be discharged to the outside in a safer state. In addition, the passage frame 300 may act as a support frame that stably supports the battery module 100 to improve the stability of the battery pack 101.

As described above, the passage frame 300 may include a first passage frame 310 and a second passage frame 320. The first passage frame 310 may communicate with the venting gate 121 of each of the plurality of battery modules 100 disposed in the first row among the plurality of battery modules 100. The second passage frame 320 may communicate with the venting gate 121 of each of the plurality of battery modules 100 disposed in the second row among the plurality of battery modules 100.

The blowing member 500 may be disposed at at least one side of the first passage frame 310 and the second passage frame 320 (e.g., side in the opposite direction of the y-axis). The outlet 430 may be disposed at at least one other side (e.g., side in the direction of the y-axis) of the first passage frame 310 and the second passage frame 320.

The blowing member 500 may be disposed in the inner passage of each of the passage frames 310 and 320 or may be disposed between each of the passage frames 310 and 320 and the lower housing 410. The blowing member 500 may be disposed adjacent to the battery module 100 that is furthest from the venting member among the plurality of battery modules 100. The blowing member 500 may forcibly discharge air from the inner passage of the passage frame 300 to the outside through the venting member. Since the blowing member 500 rotates with the rotation of the motor 510, a flow of the gas within the passage frames 310 and 320 may be accelerated. As the blowing member 500 rotates, the gas in the passage frames 310 and 320 may move toward the outlet 430 and then may be discharged to the outside of the battery pack 101.

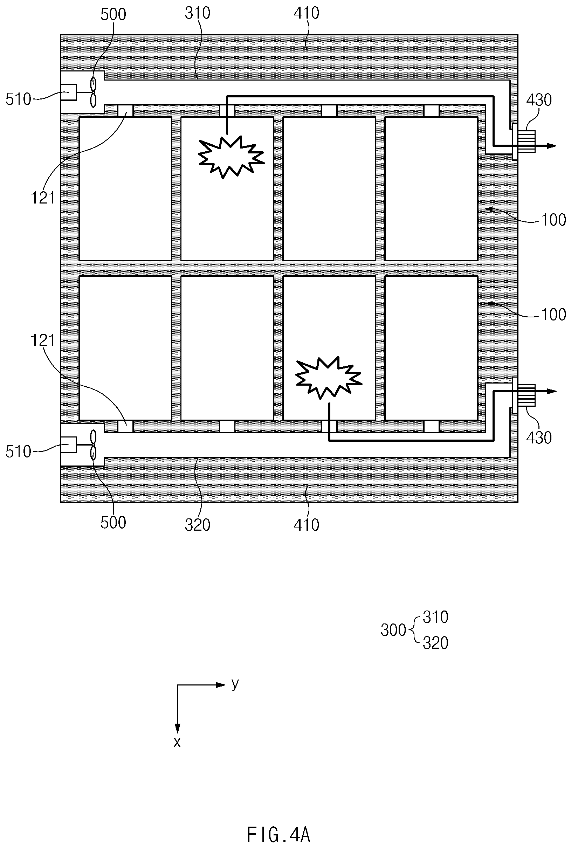

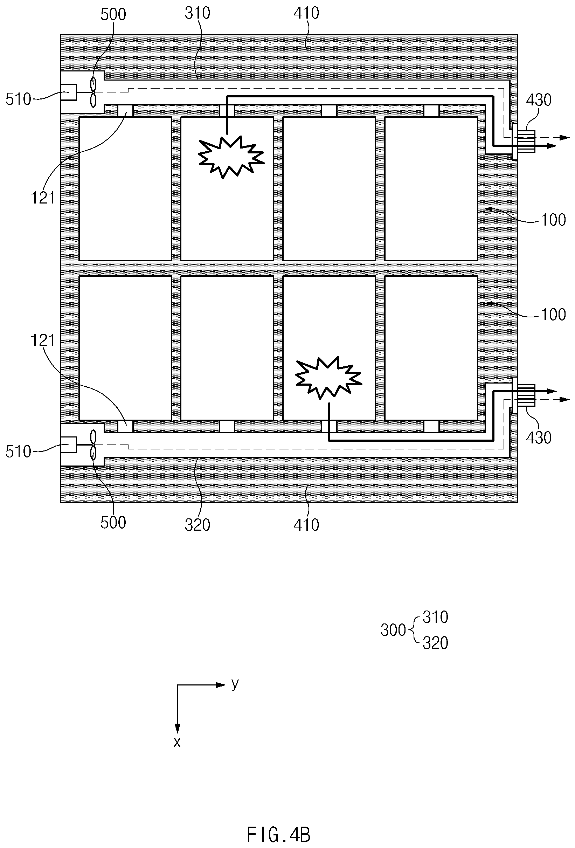

FIGS. 4a and 4b are views for explaining a method for discharging a gas within a battery pack according to an embodiment out of the scope of the present invention, which uses the passage frame illustrated in FIG. 3.

As illustrated in FIG. 4a, issues such as overvoltage, overcurrent, or overheating (or heat issues) may occur within at least one battery module 100 among the plurality of battery modules 100. In this case, the high-pressure venting gas may be discharged from the inside of the battery module 100 through the venting gate 121. The high-temperature and high-pressure gas and flame discharged through the venting gate 121 may be introduced into the inner passages of the passage frames 310 and 320. The introduced high-temperature and high-pressure gas and flame may be discharged to the outside through a venting member including at least one of the outlet, the rupture disc, or the venting valve. The gas introduced into the inner passages of the passage frames 310 and 320 may be discharged at a first rate.

Here, the battery management system may monitor at least one of the temperature, the pressure, the amount of gas, or the flow rate of the gas inside the passage frames 310 and 320 in real time or periodically. The battery management system may control the blowing member 500 to operate when at least one of the temperature, the pressure, the amount of gas, or the flow rate of the gas inside the passage frames 310 and 320 reaches a reference value. The blowing member 500 may rotate by power supplied to the motor 510. Due to the rotational movement of the blowing member 500, the high-pressure gas and flame in the inner passage of the passage frame 300 may be forcibly discharged to the outside through the outlet 430, as illustrated in FIG. 4b. The blowing member 500 may discharge high-pressure gas and flame from the inner passage of the passage frame 300 to the outside at a second rate. The second rate may be higher than the first rate (performance of the venting member) at which the high-pressure gas and flame in the inner passage of the passage frame 300 is discharged to the outside through the venting member including the outlet. Thus, the increase in temperature and pressure inside the battery pack 101 may be suppressed to prevent structural deformation and collapse of the battery pack 101 from occurring.

### Second embodiment

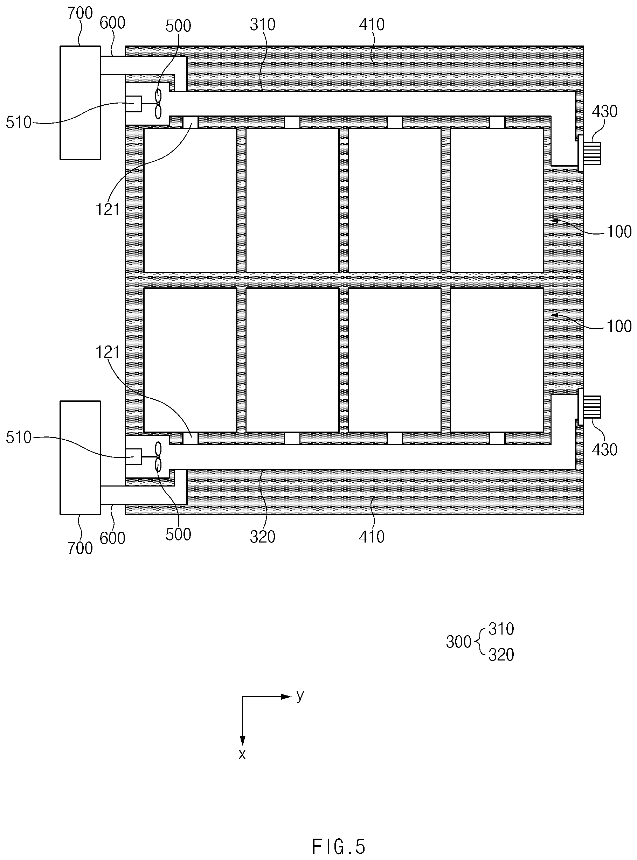

FIG. 5 is a cross-sectional view illustrating a portion of a battery pack according to an embodiment of the present invention. The battery pack illustrated in FIG. 5 may have the same components as the battery pack of the first embodiment illustrated in FIGS. 1 and 3, except that it further includes a storage tank 700 and a fluid supply tube 600. Thus, it is obvious that the detailed description of the same components is regarded as the contents of the battery pack of the first embodiment.

Referring to FIG. 5, the battery pack 501 according to the second embodiment of the present invention may include a storage tank 700 and a fluid supply tube 600.

The fluid supply tube 600 may be provided to be branched from a passage frame 300. The blowing member 500 disposed within the passage frame 300 may not obstruct a flow of fluid injected through the storage tank 700.

One end of the fluid supply tube 600 may be coupled to the storage tank 700 disposed at at least one of the inside and outside of the pack housing 400. The other end of the fluid supply tube 600 may communicate with the inner passage of the passage frame 300.

The storage tank 700 may store the fluid capable of being injected into the inner passage of the passage frame 300. The fluid may be periodically filled and stored in the storage tank 700. The storage tank 700 may store at least one of a gas for discharging foreign substances or a liquid for discharging foreign substances. For example, the gas for discharging the foreign substances may contain nitrogen, and the liquid for discharging the foreign substances may contain water.

The storage tank 700 may include a plurality of storage tanks storing different fluids or the same fluid. For example, the storage tank 700 may include a first storage tank storing a gas containing nitrogen and a second storage tank storing a liquid containing water. The fluid may be supplied to the inside of the fluid supply tube 600 and the passage frame 300 in order or in reverse order of the first storage tank and the second storage tank. A pump (not shown) connected to the storage tank 700 may pump the fluid in the storage tank 700 so that the fluid stored in the storage tank 700 is injected into the fluid supply tube 600.

The storage tank 700 may inject the fluid at high pressure into the fluid supply tube 600 and the passage frame 300 toward the outlet 430 to remove the foreign substances accumulated inside the passage frame 300 and the outlet 430. The foreign substances may be generated by being carbonized when the battery cell 103 is ignited or may be generated by melting at least one of the venting member including the outlet 430 or the blowing member 500. Thus, the foreign substances may be smoothly discharged to the outside of the battery pack 101 through the fluid injected at
the high pressure.

As an example, when the temperature and pressure inside the passage frame 300 rise in spite of the operation of the blowing member 500 when the blowing member 500 operates, the fluid may be injected into the passage frame 300 through the fluid supply tube 600. In spite of the operation of the blowing member 500, when at least one of the temperature or pressure of the inner passage of the passage frame 300 reaches a preset reference value, the storage tank 700 may inject the fluid into the passage frame 300. Specifically, the amount of gas generated from at least one of the plurality of battery modules 100 may be greater than the amount of gas discharged to the outside due to the operation of the blowing member 500. In this case, the temperature and pressure inside each of the passage frame 300 and the battery module 100 may increase. When flame is generated and propagated due to the increase in temperature and pressure, the foreign substances generated by the carbonization or melting of the structure inside the battery pack may be accumulated in the inner passage and outlet 430 of the passage frame 300. The foreign substances may block the inner passage and the outlet 430 of the passage frame 300 to reduce the amount of gas discharged through the passage frame 300, thereby accelerating the increase in pressure and temperature inside the battery pack 101. Thus, the fluid injected at high pressure by the storage tank 700 may discharge the foreign substances accumulated in the inner passage and outlet 430 of the passage frame 300 to the outside of the battery pack 101.

As another example, when the temperature and pressure inside the passage frame 300 are below the reference values after the operation of the blowing member 500 is completed, the storage tank 700 may inject the fluid into the passage frame 300 through the fluid supply tube 600. Thus, the foreign substances accumulated inside the passage frame 300 and at the outlet 430 may be smoothly discharged to the outside of the battery pack 101, and thus, the inside of the battery pack 101 may be maintained at a certain pressure level.

As another example, without the operation of the blowing member 500, after the gas is discharged through the venting gate 121, the passage frame, and the outlet, the storage tank 700 may inject the fluid into the passage frame 300 through the fluid supply tube 600. Thus, the foreign substances accumulated inside the passage frame 300 and at the outlet 430 may be smoothly discharged to the outside of the battery pack 101, and thus, the inside of the battery pack 101 may be maintained at a certain pressure level.

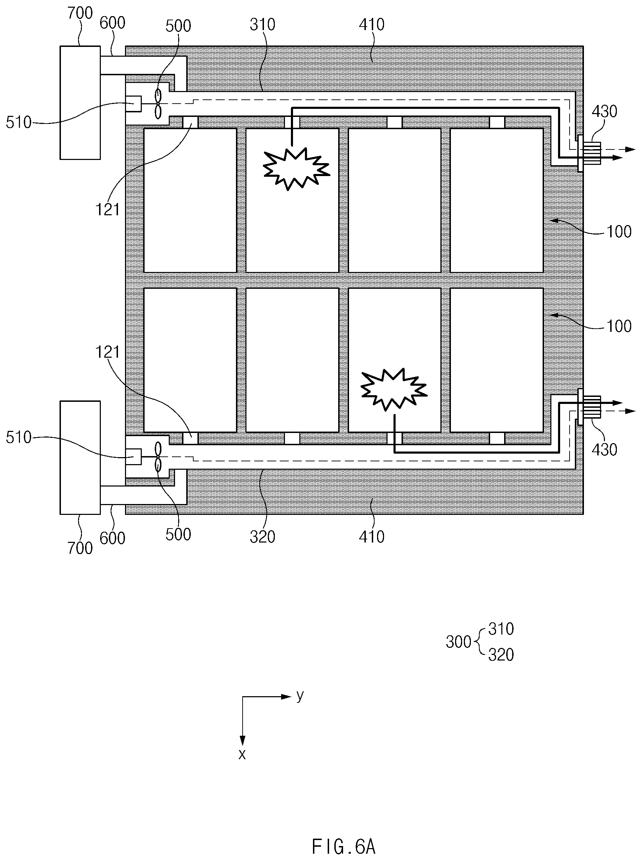

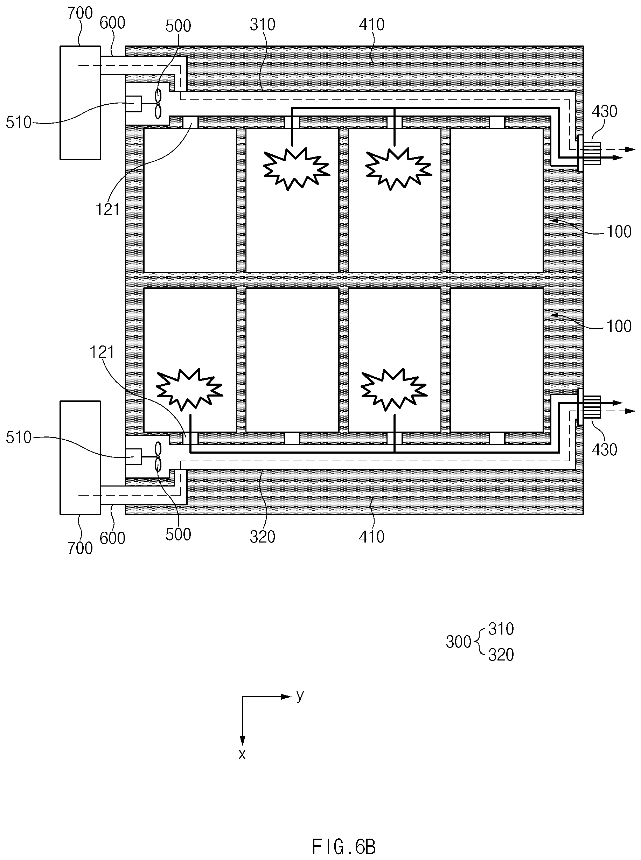

FIGS. 6a and 6b are views for explaining a method for discharging a gas within a battery pack according to another embodiment of the present invention, which uses the passage frame illustrated in FIG. 5.

As illustrated in FIG. 6a, issues such as overvoltage, overcurrent, or overheating (heat issues) may occur within at least one battery module 100 among a plurality of battery modules 100. In this case, a venting gas from the inside of the battery module 100 may be discharged through a venting gate 121. High-temperature and high-pressure venting gas and flame discharged through the venting gate 121 may be introduced into the inside of passage frames 310 and 320. The introduced high-temperature and high-pressure venting gas and flame may be discharged to the outside through a venting member including an outlet at a first rate.

Here, a battery management system may monitor at least one of a temperature, a pressure, an amount of gas, or a flow rate of a gas inside the passage frames 310 and 320 in real time or periodically. When at least one of the temperature, the pressure, the amount of gas, or the flow rate of gas inside the passage frames 310 and 320 reaches a reference value, the battery management system may control a blowing member 500 to operate. For example, the battery management system may control the blowing member 500 to operate when a pressure in an inner passage of each of the passage frames 310 and 320 increases and reaches a first pressure. The blowing member 500 may rotate by power supplied to a motor 510. Due to the rotational movement of the blowing member 500, the high-pressure gas and flame inside the passage frame 300 may be forcibly discharged to the outside through the outlet 430. The blowing member 500 may discharge high-pressure venting gas and flame inside the passage frame 300 to the outside at a second rate. The second rate may be higher than the first rate (or the performance of the venting member) at which the high-pressure venting gas and flame inside the passage frame 300 are discharged to the outside through the venting member.

In spite of the operation of the blowing member 500, when at least one of the temperature, the pressure, the amount of gas, or the flow rate of the inner passage of the passage frame 310 and 320 reaches the reference value, as illustrated in FIG. 6b, a storage tank 700 may inject a fluid into the passage frame 300. For example, the storage tank 700 may inject the fluid into the passage frame 300 when the pressure of the inner passage of the passage frames 310 and 320 is the first pressure or reaches a second pressure higher than the first pressure. The storage tank 700 may inject the fluid at a third pressure that is higher than the second pressure.

The fluid injected at a high pressure (e.g., third pressure) by the storage tank 700 may discharge foreign substances accumulated in the inner passage and the outlet 430 of the passage frame 300 to the outside of the battery pack 101. Thus, the inside of the battery pack 101 may be maintained at certain temperature and pressure levels.

The structures of the battery pack 101 described above are not limited to the embodiments described in each drawing, and the structures described in each drawing may be applied in combination. For example, the battery pack 101 may employ only the plurality of blowing members 500 as described in FIGS. 3, 4a, and 4b, employ only the plurality of storage tanks 700 and fluid supply tubes 600 without the blowing member 500 as described in FIGS. 5, 6a, and 6b, or employ a combination of the blowing member 500, the storage tank 700, and the fluid supply tube 600, as described in FIGS. 5, 6a, and 6b.

In addition, the battery pack 101 described above may be applied to various devices. It may be applied to transportation means such as electric bicycles, electric vehicles, hybrids, etc., but is not limited thereto and may be applied to all various devices capable of using the battery pack 101.

While the embodiments of the present invention have been described with reference to the specific embodiments, it will be apparent to those skilled in the art that various changes and modifications may be made without departing from the scope of the invention as defined in the following claims.

### [Description of the Symbols]

- 101:: Battery pack
- 100:: Battery module
- 120:: Endplate
- 121:: Venting gate
- 430:: Outlet
- 500:: Blowing member
- 510:: Motor
- 300,310,320:: Passage frame
- 600:: Fluid supply tube
- 700:: Storage tank

## Claims

1. A battery pack (101) comprising:
a plurality of battery modules (100);
a passage frame (300) disposed along an edge of at least a portion of the plurality of battery modules to define an inner passage; and
a blowing member (500) communicating with one end of the inner passage of the passage frame (300) to control a gas discharge rate within the inner passage
a pack housing (400) configured to accommodate the battery modules (100) and the passage frame (300);
an outlet (430) communicating with the other end of the inner passage of the passage frame;
**characterized in that** the battery pack comprises:
a storage tank (700) disposed at at least one of the inside or the outside of the pack housing,
a fluid supply tube (600) disposed between the storage tank and the passage frame (300); the fluid supply tube (600) being branched from the passage frame; and
wherein a fluid stored in the storage tank is supplied into the inner passage of the passage frame (300) through the fluid supply tube (600).

2. The battery pack (101) of claim 1, wherein the fluid is at least one of a liquid comprising water or a gas comprising nitrogen.

3. The battery pack (101) of claim 1, wherein the blowing member (500) operates when a pressure of the inner passage is a first pressure, and
the storage tank (700) operates when the pressure of the inner passage is the first pressure or a second pressure higher than the first pressure after the blowing member operates.

4. The battery pack (101) of claim 3, wherein the storage tank (700) is configured to discharge the fluid at a third pressure higher than the second pressure.

5. The battery pack (101) of claim 1, wherein the storage tank (700) is provided in plurality,
one of the plurality of storage tanks is configured to store a gas for discharging foreign substances, which is injected into the inner passage, and
the other of the plurality of storage tanks is configured to store a liquid for discharging foreign substances, which is injected into the inner passage.

6. The battery pack (101) of claim 1, wherein the passage frame (300) comprises:
a first passage frame (310) disposed along an edge of one side of the plurality of battery modules; and
a second passage frame (320) disposed along an edge of the other side of the plurality of battery modules.

7. The battery pack (101) of claim 1, wherein the blowing member (500) comprises a rotating fan.

8. A device comprising the battery pack (101) of claim 1.

## Patentansprüche

1. Batteriepack (101), umfassend:
eine Vielzahl von Batteriemodulen (100);
einen Durchgangsrahmen (300), der entlang einer Kante von mindestens einem Abschnitt der Vielzahl von Batteriemodulen angeordnet ist, um einen inneren Durchgang zu definieren; und
ein Blaselement (500), das mit einem Ende des inneren Durchgangs des Durchgangsrahmens (300) in Verbindung steht, um eine Gasaustrittsrate innerhalb des inneren Durchgangs zu steuern;
ein Packgehäuse (400), das konfiguriert ist, um die Batteriemodule (100) und den Durchgangsrahmen (300) aufzunehmen;
einen Auslass (430), der mit dem anderen Ende des inneren Durchgangs des Durchgangsrahmens in Verbindung steht;
**dadurch gekennzeichnet, dass** das Batteriepack umfasst:
einen Speichertank (700), der an mindestens einem von der Innenseite oder der Außenseite des Packgehäuses angeordnet ist,
ein Fluidzufuhrrohr (600), das zwischen dem Speichertank und dem Durchgangsrahmen (300) angeordnet ist; wobei das Fluidzufuhrrohr (600) von dem Durchgangsrahmen abzweigt;
und wobei ein in dem Speichertank gespeichertes Fluid durch das Fluidzufuhrrohr (600) in den inneren Durchgang des Durchgangsrahmens (300) zugeführt wird.

2. Batteriepack (101) nach Anspruch 1, wobei das Fluid mindestens eines von einer Flüssigkeit, die Wasser umfasst, oder einem Gas, das Stickstoff umfasst, ist.

3. Batteriepack (101) nach Anspruch 1, wobei das Blaselement (500) arbeitet, wenn ein Druck des inneren Durchgangs ein erster Druck ist, und
der Speichertank (700) arbeitet, wenn der Druck des inneren Durchgangs der erste Druck oder ein zweiter Druck ist, der höher ist als der erste Druck, nachdem das Blaselement arbeitet.

4. Batteriepack (101) nach Anspruch 3, wobei der Speichertank (700) konfiguriert ist, um das Fluid bei einem dritten Druck abzugeben, der höher als der zweite Druck ist.

5. Batteriepack (101) nach Anspruch 1, wobei der Speichertank (700) in einer Vielzahl vorgesehen ist,
einer aus der Vielzahl von Speichertanks konfiguriert ist, um ein Gas zum Abgeben von Fremdstoffen zu speichern, das in den inneren Durchgang eingespeist wird, und der andere aus der Vielzahl von Speichertanks konfiguriert ist, um eine Flüssigkeit zum Abgeben von Fremdstoffen zu speichern, die in den inneren Durchgang eingespeist wird.

6. Batteriepack (101) nach Anspruch 1, wobei der Durchgangsrahmen (300) umfasst:
einen ersten Durchgangsrahmen (310), der entlang einer Kante einer Seite der Vielzahl von Batteriemodulen angeordnet ist;
und einen zweiten Durchgangsrahmen (320), der entlang einer Kante der anderen Seite der Vielzahl von Batteriemodulen angeordnet ist.

7. Batteriepack (101) nach Anspruch 1, wobei das Blaselement (500) einen rotierenden Lüfter umfasst.

8. Vorrichtung, umfassend das Batteriepack (101) nach Anspruch 1.

## Revendications

1. Bloc-batterie (101) comprenant :
une pluralité de modules de batterie (100) ;
un cadre de passage (300) disposé le long d'un bord d'au moins une partie de la pluralité de modules de batterie pour définir un passage intérieur ; et
un élément soufflant (500) communiquant avec une extrémité du passage intérieur du cadre de passage (300) pour commander un débit d'évacuation de gaz à l'intérieur du passage intérieur ;
un boîtier de bloc (400) configuré pour recevoir les modules de batterie (100) et le cadre de passage (300) ;
une sortie (430) communiquant avec l'autre extrémité du passage intérieur du cadre de passage ;
**caractérisé en ce que** le bloc-batterie comprend :
un réservoir de stockage (700) disposé au moins à l'intérieur ou à l'extérieur du boîtier de bloc,
un tube d'alimentation en fluide (600) disposé entre le réservoir de stockage et le cadre de passage (300) ;
le tube d'alimentation en fluide (600) étant ramifié à partir du cadre de passage ; et dans lequel un fluide stocké dans le réservoir de stockage est fourni dans le passage intérieur du cadre de passage (300) par l'intermédiaire du tube d'alimentation en fluide (600).

2. Bloc-batterie (101) selon la revendication 1, dans lequel le fluide est au moins l'un d'un liquide comprenant de l'eau ou d'un gaz comprenant de l'azote.

3. Bloc-batterie (101) selon la revendication 1, dans lequel l'élément soufflant (500) fonctionne lorsqu'une pression du passage intérieur est une première pression, et
le réservoir de stockage (700) fonctionne lorsque la pression du passage intérieur est la première pression ou une deuxième pression supérieure à la première pression après que l'élément soufflant fonctionne.

4. Bloc-batterie (101) selon la revendication 3, dans lequel le réservoir de stockage (700) est configuré pour évacuer le fluide à une troisième pression supérieure à la deuxième pression.

5. Bloc-batterie (101) selon la revendication 1, dans lequel le réservoir de stockage (700) est prévu en pluralité,
l'un de la pluralité de réservoirs de stockage est configuré pour stocker un gaz pour évacuer des substances étrangères, qui est injecté dans le passage intérieur, et
l'autre de la pluralité de réservoirs de stockage est configuré pour stocker un liquide pour évacuer des substances étrangères, qui est injecté dans le passage intérieur.

6. Bloc-batterie (101) selon la revendication 1, dans lequel le cadre de passage (300) comprend :
un premier cadre de passage (310) disposé le long d'un bord d'un côté de la pluralité de modules de batterie ; et
un deuxième cadre de passage (320) disposé le long d'un bord de l'autre côté de la pluralité de modules de batterie.

7. Bloc-batterie (101) selon la revendication 1, dans lequel l'élément soufflant (500) comprend un ventilateur rotatif.

8. Dispositif comprenant le bloc-batterie (101) selon la revendication 1.
